**Europäisches Patentamt**

**European Patent Office**

**Office européen des brevets**

(19)

(11) Veröffentlichungsnummer : **0 065 657**
**B1**

(12) **EUROPÄISCHE PATENTSCHRIFT**

(45) Veröffentlichungstag der Patentschrift :
30.12.86

(51) Int. Cl.⁴ : **C 08 F236/12, C 08 F220/42**

(21) Anmeldenummer : **82103490.7**

(22) Anmeldetag : **24.04.82**

(54) **Verfahren zur Herstellung hochnitrilhaltiger Kautschuklatices.**

(30) Priorität : **08.05.81 DE 3118200**

(43) Veröffentlichungstag der Anmeldung :
**01.12.82 Patentblatt 82/48**

(45) Bekanntmachung des Hinweises auf die Patenterteilung : **30.12.86 Patentblatt 86/52**

(84) Benannte Vertragsstaaten :
**BE DE FR GB IT NL**

(56) Entgegenhaltungen :
**DE-A- 2 347 755**
**US-A- 3 344 103**

(73) Patentinhaber : **BAYER AG**
**Konzernverwaltung RP Patentabteilung**
**D-5090 Leverkusen 1 Bayerwerk (DE)**

(72) Erfinder : **Heins, Ferdinand, Dr.**
**Linzer Strasse 18**
**D-4019 Monheim (DE)**
Erfinder : **Matner, Martin, Dr.**
**Dorfstrasse 14**
**D-5068 Odenthal (DE)**
Erfinder : **Bross, Hermann Josef**
**Dürscheider Weg 16**
**D-5090 Leverkusen 3 (DE)**

## Beschreibung

Die Erfindung betrifft ein Verfahren zur Herstellung von Kautschuklatices mit hohen Gehalten an Acrylnitril und/oder Methacrylnitril und bestimmten Defo-Werten.

Die Herstellung von Tauchartikeln aus Nitrilkautschuklatices und die Aufarbeitung von Synthesekautschukdispersionen zur Herstellung von Festkautschuk wird in der Regel durch Fällungsverfahren vorgenommen. Als koagulierende Lösung wird dazu beispielsweise eine Salzlösung eingesetzt. Die Ausfällung kann in einem Pulpenprozeß erfolgen, so daß Faseraufschlämmungen aus synthetischen oder natürlichen Fasern wie Cellulose-, Polyester-, Polyamid- und Polypropylenfasern, vegetabilisch und/oder chromgegerbten Lederfasern und mineralischen Fasern wie Glas-, Asbest-, Gesteins- und Schlackenfasern gebunden werden können. Zur Herstellung von Tauchartikeln wird die Koagulation so vorgenommen, indem eine Form in eine den Kautschuk koagulierende Lösung und anschließend in den Latex getaucht wird, so daß sich ein Film auf der Oberfläche der Form ausbildet.

Es ist bekannt, daß derartige Produkte, wenn sie eine sehr gute Öl- und Lösungsmittelbeständigkeit aufweisen sollen, größere Mengen an Acrylnitril und/oder Methacrylnitril enthalten müssen. Nun ist weiterhin bekannt, daß die Copolymerisation von Acrylnitril und/oder Methacrylnitril mit Butadien und/oder Isopren und gegebenenfalls weiteren Monomeren bei hohen Acrylnitrilkonzentrationen oft schnell und unkontrolliert abläuft, was zu Produkten mit zu hohen Defo-Werten führt, insbesondere dann, wenn aus ökonomischen Gründen ein möglichst hoher Monomerenumsatz angestrebt wird.

Zwar ist aus der DE-AS-2 347 755 bekannt, Tauchartikel aus Kautschuklatices mit relativ hohen Acrylnitril- oder Methacrylnitrilgehalten und Defo-Werten von weniger als 2 000 herzustellen, jedoch beträgt der Nitrilgehalt nach den Ausführungsbeispielen weniger als 30 Gew.-% der Monomermenge bei Umsätzen, die unter 95 Gew.-% der Monomermenge liegen. Die Polymerisation wird dort mit organischen Peroxiden initiiert. Nach neuerer Bezeichnung entspricht der angegebene Defo-Wert einem Defo-Wert von etwa 20 N.

Es wurde nun gefunden, daß man hochnitrilhaltige Kautschuklatices mit einem Defo-Wert zwischen 5 und 50 N, vorzugsweise 10 bis 30 N, aus 40 bis 60 Gew.-% Butadien und/oder Isopren, 40 bis 60 Gew.-% Acrylnitril und/oder Methacrylnitril, 0 bis 15 Gew.-% Styrol und 0 bis 10 Gew.-% $\alpha,\beta$-monoethylenisch ungesättigter Carbonsäuren durch Polymerisation bei einem Verhältnis Wasser zu Monomeren von 3 : 1 bis 1 : 1 in Primärfahrweise bis zu einem Umsatz der Monomeren von mindestens 95 % dadurch erhält, daß man bei 30 bis 50 °C in Gegenwart von 0,5 bis 1,0 Gew.-% eines langkettigen Alkylmercaptans mit 8 bis 12 Kohlenstoffatomen, von mindestens 2 Gew.-% mindestens eines anionogenen Tensids und von 0,2 bis 0,8 Gew.-% eines Alkali- und/oder Ammoniumperoxodisulfates polymerisiert, wobei sich die Prozentangaben auf die Gesamtmenge der Monomeren beziehen.

Unter Primärfahrweise wird dabei die Art der Polymerisation verstanden, bei der alle Reaktionskomponenten und Hilfsmittel von Anfang an eingesetzt werden.

Als $\alpha,\beta$-monoethylenisch ungesättigte Carbonsäuren eignen sich Mono- und Dicarbonsäuren wie Acrylsäure, Methacrylsäure, Itaconsäure, Fumarsäure und Maleinsäure sowie die Monoester der erwähnten Dicarbonsäuren wie Mono-$C_1$-$C_4$-alkylitaconat, -fumarat und -maleat.

Die Polymerisation wird in einem pH-Bereich zwischen 3 und 12 durchgeführt. Die Herstellung der wäßrigen Dispersion erfolgt unter Verwendung von 2 bis 20 Gew.-% anionogener und gegebenenfalls nicht-ionogener Emulgier- oder Dispergiermittel oder Kombinationen hiervon, wobei sich die Prozentangabe auf die Gesamtmenge der Monomeren bezieht.

Beispiele anionogener Emulgatoren sind Salze höherer Fettsäuren und Harzsäuren, höhere Fettalkoholsulfate, höhere Alkylsulfonate und Alkylarylsulfonate sowie deren Kondensationsprodukte mit Formaldehyd, höhere Hydroxyalkylsulfonate, Salze der Sulfobernsteinsäureester und sulfatierter Ethylenoxidaddukte.

Als nichtionogene Emulgatoren können z. B. die bekannten Umsetzungsprodukte des Ethylenoxids mit Fettalkoholen wie Lauryl-, Myristyl-, Cetyl-, Stearyl- und Oleylalkohol, mit Fettsäuren wie Laurin-, Myristin-, Palmitin-, Stearin- und Ölsäure sowie deren Amiden und mit Alkylphenolen wie Isooctyl-, Isononyl- und Dodecylphenol verwendet werden. Ferner seien die Umsetzungsprodukte des Ethylenoxids mit Isononyl-, Dodecyl- und Tetradecylmercaptan und höheren Alkylmercaptanen sowie höheren Alkylthiophenolen oder analoge Umsetzungsprodukte veretherter oder veresterter Polyhydroxyverbindungen mit langer Alkylkette wie Sorbitmonostearat als Beispiele erwähnt.

Diese Verbindungen werden stets mit 4 bis 60 oder mehr Molen Ethylenoxid umgesetzt. Außerdem können auch Blockcopolymere aus Ethylenoxid und Propylenoxid mit mindestens einem Mol Ethylenoxid verwendet werden.

Häufig empfiehlt es sich, die Emulsionspolymerisation in Gegenwart von Puffersubstanzen, Chelierungsmitteln, Promotoren und ähnlichen Zusätzen durchzuführen, deren Art und Menge dem Fachmann bekannt sind.

Nach Erreichen eines Monomerenumsatzes von mindestens 95 % wird die Polymerisation durch Zugabe eines Kettenabbruchmittels beendet. Geeignete Kettenabbruchmittel sind beispielsweise Natriumdimethyldithiocarbamat, Hydroxylamin, Dialkylhydroxylamin, Hydrazinhydrate und Hydrochinon. Nach dem Abstoppen der Polymerisation wird der Latex in an sich bekannter Weise von restlichen Monomeren befreit.

Bei der erfindungsgemäßen Verfahrensführung werden Kautschuklatices erhalten, deren Kautschuke Defo-Werte zwischen 5 N und 50 N aufweisen. Dies ist von besonderer Wichtigkeit, da der Defo-Wert für die Mehrzahl der Anwendungsgebiete nicht zu hoch sein darf, da beispielsweise aus Kautschuklatices mit höheren Defo-Werten des Kautschuks bei Tauchprozessen rissige Filme, bei der Herstellung von Gummifäden schrumpfende, rissige Fäden entstünden oder bei Anwendung solcher Latices in Pulpenprozessen kautschukmodifizierte Papiere und Pappen mit zu großer Kompressionshärte hergestellt würden, die anwendungstechnisch, beispielsweise für Dichtungszwecke, unbrauchbar sind.

Die Ermittlung des Defo-Wertes erfolgt durch Fällung des Latex mit Methanol, Abquetschen des Serums, Waschen mit Wasser und Trocknung in Heißluft bei 100 bis 120 °C sowie Prüfung nach DIN 53 514.

In den folgenden Beispielen sind die Prozentangaben Gewichtsprozente.

## Beispiel 1

In einem 40-l-Kessel mit Rührer werden 572 g einer Natrium-Harzseife mit einem Festgehalt von 70 % in 22,2 kg Wasser gelöst. In dieser Lösung werden 5 kg Acrylnitril, 5 kg Butadien sowie 100 g tert.-Dodecylmercaptan emulgiert. Nach Aufheizen auf 40 °C wird die Polymerisation mit einer Lösung von 40 g Kaliumperoxodisulfat in 900 g Wasser in Gang gebracht. Nach 22 Stunden Polymerisationszeit bei 40 °C wird ein Feststoffgehalt von 30,6 % erreicht. Anschließend wird die Polymerisation durch Zugabe einer Lösung von 80 g 25 %igem wäßrigem Diethylhydroxylamin in 200 g Wasser abgebrochen.

Man erhält einen Kautschuklatex mit einem pH von 9,6 und einem Defo-Wert des Kautschuks von 15,3 N.

## Beispiel 2

In einem 40-l-Kessel mit Rührer werden 400 g Natrium-4-dodecylbenzolsulfonat (75 % Wirkstoff) in 21,9 kg Wasser gelöst. In der Lösung werden 5 kg Butadien, 4,5 kg Acrylnitril und 556 g Methacrylsäure (90 % Wirkstoff) sowie 80 g n-Dodecylmercaptan emulgiert. Nach Aufheizen auf 35 °C wird die Polymerisation mit einer Lösung von 50 g Kaliumperoxodisulfat in 1,1 kg Wasser initiiert und nach 11 Stunden Polymerisationszeit bei 35 °C durch Zugabe einer Lösung von 80 g 25 %igem wäßrigem Diethylhydroxylamin in 200 g Wasser, wobei ein Feststoffgehalt von 30,8 % erreicht wurde, abgebrochen.

Man erhält einen Kautschuklatex mit einem pH von 4,0 und einem Defo-Wert des Kautschuks von 12,7 N.

## Beispiel 3

In einem 40-l-Kessel mit Rührer werden 572 g einer Natrium-Harzseife mit einem Festgehalt von 70 % in 17,7 kg Wasser gelöst. In der Lösung werden 4,5 kg Acrylnitril, 4 kg Butadien und 1,5 kg Styrol sowie 80 g tert.-Dodecylmercaptan emulgiert. Nach Aufheizen auf 40 °C wird die Polymerisation mit einer Lösung von 50 g Kaliumperoxodisulfat in 1,1 kg Wasser initiiert und nach 18,5 Stunden Polymerisationszeit bei 40 °C durch Zugabe einer Lösung von 80 g 25 %igem wäßrigem Diethylhydroxylamin in 200 g Wasser, wobei ein Feststoffgehalt von 34,2 % erreicht wurde, abgebrochen.

Man erhält einen Kautschuklatex mit einem pH von 9,2 und einem Defo-Wert des Kautschuks von 29,1 N.

## Vergleichsbeispiel

In einem 250-l-Kessel mit Rührer wird die Polymerisation einer Emulsion aus 38,5 kg Butadien, 21,7 kg Acrylnitril, 2,33 kg 90 %iger Methacrylsäure und 280 g tert.-Dodecylmercaptan sowie einer Lösung von 700 g eines Natriumsalzes der Kondensationsprodukte von 2-Naphthalinsulfonsäure mit Formaldehyd, 350 g 4-Dodecylbenzolsulfonsäure, 70 g Tetranatriumdiphosphat, 35 g Tetranatrium-ethylendiamin-N,N,N',N'-tetraacetat (Trilon B) und 14 g 10 %iger Eisen (II)-sulfat-Lösung in 68,6 kg Wasser bei einem pH-Wert von 3,5 (mit wäßriger Ammoniak-Lösung eingestellt) mit 35 g 80 %igem tert.-Butylhydroperoxid und 17,5 g Natriumformaldehydsulfoxylat-dihydrat (Rongalit C) bei 35 °C initiiert. Bei 15 Gew.-% und 30 Gew.-% Feststoffgehalt wird jeweils eine Mischung aus 3,5 kg Acrylnitril, 389 g 90 %iger Methacrylsäure und 315 g tert.-Dodecylmercaptan hinzugedrückt und mit einer Lösung von 700 g Ammonium-4-dodecylbenzolsulfonat und 8,75 g Rongalit C in 5,25 kg Wasser nachstabilisiert bzw. nachaktiviert.

Nach Polymerisationsende wird mit einer Lösung von 560 g 25 %igem wäßrigem Diethylhydroxylamin in 1,4 kg Wasser abgestoppt, entgast und mit 10 %iger Kalilauge ein pH von 8,5 eingestellt. Der Feststoffgehalt liegt bei 45 %.

Die Defo-Werte erweisen sich als nicht reproduzierbar und erreichen Werte bis 200 N.

Variationen des Kettenübertragungsmittels üben keinen Einfluß auf die Reproduzierbarkeit der Defo-Werte aus.

Bei Vorlage der Gesamtmenge Acrylnitril läßt sich die Polymerisation bei dieser Fahrweise überdies nur schwer kontrollieren.

## Patentansprüche

1. Verfahren zur Herstellung von Nitrilkautschuklatices, deren Feststoff einen Defo-Wert zwischen 5 und 50 N aufweist, aus 40 bis 60 Gew.-% Butadien und/oder Isopren, 40 bis 60 Gew.-% Acrylnitril und/oder Methacrylnitril, 0 bis 15 Gew.-% Styrol und 0 bis 10 Gew.-% $\alpha,\beta$-monoethylenisch ungesättigter Carbonsäuren durch Polymerisation bei einem Verhältnis Wasser zu Monomeren von 3 : 1 bis 1 : 1 in Primärfahrweise bis zu einem Umsatz der Monomoren von mindestens 95 % dadurch gekennzeichnet, daß man bei 30 bis 50 °C in Gegenwart von 0,5 bis 1,0 Gew.-% eines langkettigen Alkylmercaptans mit 8 bis 12 Kohlenstoffatomen, mindestens 2 Gew.-% mindestens eines anionogenen Tensids und von 0,2 bis 0,8 Gew.-% eines Alkali- und/oder Ammoniumperoxodisulfates polymerisiert, wobei sich die Prozentangaben auf die Gesamtmenge der Monomeren beziehen.

2. Verfahren nach Anspruch 1, dadurch gekennzeichnet, daß man als $\alpha,\beta$-monoethylenisch ungesättigte Carbonsäuren Acrylsäure, Methacrylsäure, Itaconsäure, Fumarsäure, Maleinsäure, Mono-$C_1$-$C_4$-alkylitaconat, -fumarat oder -maleat verwendet.

## Claims

1. Process for the production of nitrile rubber latices, the solids thereof having a Defo value of between 5 and 50 N, from 40 to 60 % by weight of butadiene and/or isoprene, 40 to 60 % by weight of acrylonitrile and/or methacrylonitrile, 0 to 15 % by weight of styrene and 0 to 10 % by weight of $\alpha,\beta$-monoethylenically unsaturated carboxylic acids by polymerisation in a ratio of water to monomers of 3 : 1 to 1 : 1 in a primary method of operation up to a conversion of the monomers of at least 95 %, characterised in that polymerisation is carried out at 30 to 50 °C in the presence of 0.5 to 1.0 % by weight of a long-chain alkyl mercaptan with 8 to 12 carbon atoms, at least 2 % by weight of at least one anionogenic surfactant and from 0.2 to 0.8 % by weight of an alkali metal and/or ammonium peroxodisulphate, the percentages relating to the total quantity of the monomers.

2. Process according to Claim 1, characterised in that acrylic acid, methacrylic acid, itaconic acid, fumaric acid maleic acid, mono-$C_1$-$C_4$-alkyl itaconate, fumarate or maleate are used as the $\alpha,\beta$-monoethylenically unsaturated carboxylic acids.

## Revendications

1. Procédé de préparation de latex de caoutchoucs nitriles dont la matière solide présente une valeur Defo de 5 à 50 N, à partir de 40 à 60 % en poids de butadiène et/ou d'isoprène, de 40 à 60 % en poids d'acrylonitrile et/ou de méthacrylonitrile, de 0 à 15 % en poids de styrène et de 0 à 10 % en poids d'acides carboxyliques à insaturation alpha, bêta-monoéthylénique, par polymérisation à un rapport eau/monomères de 3 : 1 à 1 : 1 selon le mode opératoire primaire jusqu'à un taux de conversion des monomères d'au moins 95 %, caractérisé en ce que l'on polymérise à une température de 30 à 50 °C en présence de 0,5 à 1,0 % en poids d'un alkylmercaptan à longue chaîne contenant 8 à 12 atomes de carbone, d'au moins 2 % en poids d'au moins un agent tensioactif anionique et de 0,2 à 0,8 % en poids d'un peroxodisulfate alcalin et/ou d'ammonium, les indications de % se rapportant à la quantité totale des monomères.

2. Procédé selon la revendication 1, caractérisé en ce que l'on utilise en tant qu'acides carboxyliques à insaturation alpha, bêta-monoéthylénique l'acide acrylique, l'acide méthacrylique, l'acide itaconique, l'acide fumarique, l'acide maléique, des itaconates, fumarates ou maléates de monoalkyle en $C_1$-$C_4$.